# EUROPEAN PATENT APPLICATION

(11) **EP 4 708 623 A2**
(43) Date of publication of application: **11.03.2026**
(21) Application number: 25194540.8
(22) Date of filing: 07.08.2025
(51) Int. Cl.: H02J 7/40, H02J 7/50, H02J 7/80, H02J 13/13

(54) **COMMUNICATION METHOD FOR BATTERY MANAGEMENT SYSTEM, AND BATTERY MANAGEMENT SYSTEM USING THE SAME**

(30) Priority: 06.09.2024 KR 20240121935
(71) Applicant: SAMSUNG SDI CO., LTD., Yongin-si, Gyeonggi-do 17084 (KR)
(72) Inventor: JONG, Changyong, 17084 Yongin-Si, Gyeonggi-do (KR)
(74) Representative: Gulde & Partner

(57) **Abstract**

A battery management system includes: a storage unit that stores first hopping history data for a plurality of channels associated with a first battery management module among a plurality of battery management modules, a model generation unit that generates a first probability distribution model associated with the first battery management module based on the first hopping history data, and a communication unit that allocates a first channel among the plurality of channels to the first battery management module using a frequency hopping method, sets first communication properties associated with the first channel based on the first probability distribution model, and performs wireless communication with the first battery management module through the first channel using the first communication properties.

## Description

### FIELD

The present disclosure relates to a communication method of a battery management system and a battery management system using the same.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (for example, home and/or utility scale power storage). A secondary battery generally includes an electrode assembly composed of a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure provides a communication method of a battery management system and a battery management system using the same to solve the problem described herein.

These and other aspects and features of the present disclosure will be described in or will be apparent from the following description of embodiments of the present disclosure.

According to some embodiments of the present disclosure, there is provided a battery management system including: a storage unit that stores first hopping history data for a plurality of channels associated with a first battery management module among a plurality of battery management modules, a model generation unit that generates a first probability distribution model associated with the first battery management module based on the first hopping history data, and
a communication unit that allocates a first channel among the plurality of channels to the first battery management module using a frequency hopping method, sets first communication properties associated with the first channel based on the first probability distribution model, and performs wireless communication with the first battery management module through the first channel using the first communication properties.

In some embodiments, the first probability distribution model may be associated with a usage frequency of each of the plurality of channels using the frequency hopping method in wireless communication between the first battery management module and the communication unit.

In some embodiments, the first communication properties associated with the first channel may include transmission power, and the communication unit may control a transmission power associated with the first channel based on the first probability distribution model.

In some embodiments, the communication unit may lower the transmission power associated with the first channel based on the first probability distribution model when a usage frequency of the first channel is greater than a predetermined threshold frequency.

In some embodiments, the communication unit may increase the transmission power associated with the first channel based on the first probability distribution model when a usage frequency of the first channel is less than a predetermined threshold frequency.

In some embodiments, the first communication properties associated with the first channel may include a bandwidth, and the communication unit may control a bandwidth associated with the first channel based on the first probability distribution model.

In some embodiments, the communication unit may lower the bandwidth of the first channel based on the first probability distribution model when a usage frequency of the first channel is higher than a predetermined threshold frequency. In some embodiments, the communication unit may increase the bandwidth of the first channel based on the first probability distribution model when a usage frequency of the first channel is lower than a predetermined threshold frequency. In some embodiments, the first communication properties associated with the first channel may include a modulation scheme, and the communication unit may control a modulation scheme associated with the first channel based on the first probability distribution model.

In some embodiments, the communication unit may determine a specific modulation scheme having a lower error correction capability than a reference modulation scheme as the modulation scheme associated with the first channel based on the first probability distribution model when a usage frequency of the first channel is higher than a predetermined threshold frequency.

In some embodiments, the communication unit may determine a specific modulation scheme having a higher error correction capability than a reference modulation scheme as the modulation scheme associated with the first channel based on the first probability distribution model when a usage frequency of the first channel is lower than a predetermined threshold frequency.

In some embodiments, the communication unit may perform wireless communication by changing the first channel allocated to the wireless communication with the first battery management module to a second channel using the frequency hopping method, the storage unit may further store a change history from the first channel to the second channel associated with the first battery management module, and the model generation unit may update the first probability distribution model associated with the first battery management module based on the change history from the first channel to the second channel associated with the first battery management module.

In some embodiments, the change history from the first channel to the second channel associated with the first battery management module stored in the storage unit may be erased after the first probability distribution model is updated. In some embodiments, the storage unit may further store second hopping history data for the plurality of channels associated with a second battery management module among the plurality of battery management modules, the model generation unit may further generate a second probability distribution model associated with the second battery management module based on the second hopping history data, and the communication unit may further allocate a second channel among the plurality of channels to the second battery management module using the frequency hopping method, sets second communication properties associated with the second channel based on the second probability distribution model, and performs wireless communication with the second battery management module through the second channel using the second communication properties.

In some embodiments, the frequency hopping method may be an adaptive frequency hopping (AFH) method, thus improving the reliability with respect to potential interference with other frequencies, such as radio frequencies. According to some embodiments of the present disclosure, there is provided a communication method of a battery management system, including: storing, in a storage unit, first hopping history data for a plurality of channels associated with a first battery management module among a plurality of battery management modules, generating, by a model generation unit, a first probability distribution model associated with the first battery management module based on the first hopping history data, allocating, by a communication unit, a first channel among the plurality of channels to the first battery management module using a frequency hopping method, setting, by the communication unit, first communication properties associated with the first channel based on the first probability distribution model, and performing, by the communication unit, wireless communication with the first battery management module through the first channel using the first communication properties.

In some embodiments, the setting of the first communication properties may include controlling, by the communication unit, transmission power associated with the first channel based on the first probability distribution model.

In some embodiments, the setting of the first communication properties may include: controlling, by the communication unit, a bandwidth associated with the first channel based on the first probability distribution model.

In some embodiments, the setting of the first communication properties may include: controlling, by the communication unit, a modulation scheme associated with the first channel based on the first probability distribution model.

In some embodiments, the communication method may further include: storing, in the storage unit, second hopping history data for the plurality of channels associated with a second battery management module among the plurality of battery management modules, generating, by the model generation unit, a second probability distribution model associated with the second battery management module based on the second hopping history data, allocating, by the communication unit, a second channel among the plurality of channels to the second battery management module using the frequency hopping method, setting, by the communication unit, second communication properties associated with the second channel based on the second probability distribution model, and performing, by the communication unit, wireless communication with the second battery management module through the second channel using the second communication properties.

According to various embodiments of the present disclosure, the radio environment for each battery management module and each channel may be estimated based on the probability distribution model or the usage frequency of each channel. In addition, an active battery management system capable of adaptively setting or controlling communication properties of wireless communication based on the estimated radio environment may be provided. According to various embodiments of the present disclosure, transmission power may be adaptively controlled utilizing channel hopping history data. For example, if the radio environment is poor, the transmission power may be controlled to a high level in advance to improve the robustness of the wireless communication channel. On the other hand, if the radio environment is favorable, the transmission power may be controlled to be low to reduce power consumption. According to various embodiments of the present disclosure, the radio environment inside the battery pack may be estimated utilizing channel hopping history data in consideration of the actual user driving environment when designing the battery pack structure of the battery management system and the battery management modules. In addition, these estimation results may also be used to improve the battery module structure design.

According to various embodiments of the present disclosure, the battery management system may allocate channels to be used for wireless communication with each battery management module through frequency hopping, considering the design structure in which a plurality of battery management modules are arranged inside the battery pack.

According to various embodiments of the present disclosure, the battery management system may perform frequency hopping based on the internal radio environment of the battery pack, which considers not only the internal structure of the battery pack but also the interference effect caused by the external environment of the battery pack.

According to various embodiments of the present disclosure, the battery management system may record the usage frequency history of each channel, that is, the hopping history data, in the wireless communication with a specific battery management module for a predetermined time through frequency hopping, and generate the probability of the usage of each channel and the probability distribution model of the usage of each channel based on the hopping history data. The communication properties of the channels used for wireless communication may be adaptively set by the generated probability distribution model.

According to various embodiments of the present disclosure, the battery management system may use the memory space secured through the refresh operation to store new channel hopping history data, thereby efficiently utilizing the memory space.

According to various embodiments of the present disclosure, when wireless communication with a specific battery management module is performed using a channel estimated to have poor signal strength through frequency hopping, the communication unit may increase the transmission power of the corresponding channel signal in advance, thereby maintaining or further improving the wireless communication performance associated with the corresponding channel at a certain level.

According to various embodiments of the present disclosure, when wireless communication with a specific battery management module is performed using a channel estimated to have good signal strength through frequency hopping, the battery management system may reduce the transmission power of the corresponding channel signal in advance, thereby reducing power consumption of the wireless communication associated with the corresponding channel. According to various embodiments of the present disclosure, since more signal processing or error correction may be possible through a wide bandwidth, if the frequency bandwidth of a channel estimated to have poor signal strength is increased, the possibility of maintaining a certain level or higher of wireless communication may be increased.

According to various embodiments of the present disclosure, the battery management system may select a stable and error-resistant modulation scheme suitable for the communication system requirements while considering the radio environment in wireless communication with a specific battery management module. Accordingly, the stability of wireless communication within the battery pack may be secured or improved to a certain level overall.

According to various embodiments of the present disclosure, the battery management system may utilize the frequency hopping record data to generate a probability distribution model associated with each of the plurality of channels used for wireless communication, and use the same to set the communication properties of each channel to perform wireless communication, thereby improving the quality of wireless communication within the vehicle.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 is a configuration diagram of a battery pack communication system according to some embodiments of the present disclosure,
FIG. 2 is a block diagram of a battery management system according to some embodiments of the present disclosure,
FIG. 3 is a diagram showing the internal structure and radio environment of a battery pack according to some embodiments of the present disclosure,
FIG. 4 is a diagram showing the external environment and radio environment of the battery pack according to some embodiments of the present disclosure,
FIG. 5 shows an example in which a wireless communication channel is established by a radio environment and frequency hopping according to some embodiments of the present disclosure,
FIG. 6 is a diagram showing a probability distribution model according to some embodiments of the present disclosure,
FIG. 7 is a diagram showing a battery management system generating a probability distribution model associated with a battery management module according to some embodiments of the present disclosure,
FIG. 8 is a diagram showing a battery management system according to some embodiments of the present disclosure setting communication properties associated with a plurality of channels,
FIG. 9 is a flowchart showing a communication method of a battery management system according to some embodiments of the present disclosure,
FIG. 10 is a diagram illustrating an example of a battery management system included in a vehicle according to some embodiments of the present disclosure,
FIG. 11 is a diagram showing an example of a vehicle and an information processing system communicating according to some embodiments of the present disclosure,
FIGS. 12 and 13 show a battery pack according to one or more embodiments of the present disclosure,
FIGS. 14 and 15 show a vehicle body and vehicle body parts having a battery pack according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor may be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that may replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, and the like may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, and the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, and the like as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The interior of a car is densely packed with various electronic devices such as motors, so the radio environment related to the car may cause interference from interchannel noise and external communications. For example, noise that may be generated by motor operation may affect the wireless communication within the car. Accordingly, the communication quality of a specific channel in the wireless communication within the car may be degraded.

In the present disclosure, adaptive frequency hopping (AFH) is a frequency hopping technique that continuously monitors a communication channel in wireless communication, avoids a frequency band with heavy interference, and switches to a frequency with relatively less interference. Adaptive frequency hopping is a frequency hopping technique that adapts to changes in the communication environment and may be used to reduce interference with other devices.

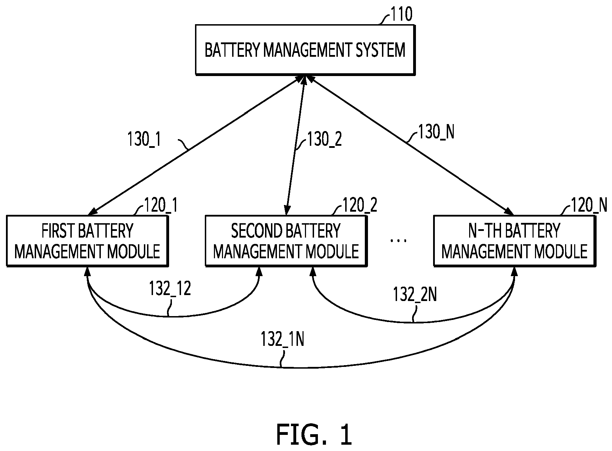

FIG. 1 is a configuration diagram of a battery pack communication system according to some embodiments of the present disclosure. Referring to FIG. 1, a battery pack may include a battery management system (BMS) 110 and a plurality of battery management modules (BMMs) 120_1, 120_2, ..., 120_N.

In one embodiment, one battery pack may include a plurality of battery modules. In addition, one battery module may include a plurality of battery cells. Here, one battery module may include a battery management module 120_1 to 120_N for monitoring and managing the state of a plurality of battery cells included in the module. In addition, the battery pack may include a battery management system 110 for collecting state information of a plurality of battery cells from the battery management modules 120_1 to 120_N included in each of the plurality of battery modules and managing the entire battery pack.

In one embodiment, the battery management system 110 may receive state information of the battery modules from the plurality of battery management modules 120_1, 120_2, ..., 120_N.

In one embodiment, a first battery module may include a first battery management module 120_1, a second battery module may include a second battery management module 120_2, and an N-th battery module may include an N-th battery management module 120_N. However, the present disclosure is not limited thereto. For example, a battery module may include a plurality of battery management modules for monitoring and managing the state of a plurality of battery cells included in the module. In this case, a plurality of battery management modules included in the battery module may monitor or manage cell state information of a plurality of battery cells included in the module together or separately.

In some embodiments, the state information may include information about a battery module associated with the battery management module. For example, the state information may include one or more of voltage, current, and temperature of a plurality of battery cells included in each battery module. In addition, the state information is not limited thereto, and a state of charge (SOC), internal resistance, number of charge/discharge cycles, power state, heat generation rate, power balance state, impedance, and/or the like may be included in the state information.

In one embodiment, communication for exchanging information between the battery management system 110 and a plurality of battery management modules 120_1, 120_2, ..., 120_N may be performed by at least one of wired communication or wireless communication. FIG. 1 illustrates an example of wireless communication performed between a battery management system 110 and a plurality of battery management modules 120_1, 120_2, ..., 120_N inside a battery pack. Wireless communication may be utilized in consideration of facilitating process simplification and high-density battery design.

Referring to FIG. 1, wireless communication within a battery pack may include first wireless communications 130_1 to 130_N between the battery management system 110 and the plurality of battery management modules 120_1, 120_2, ..., 120_N and second wireless communications 132_12, ..., 132_1N, ..., 132_2N between the plurality of battery management modules 120_1, 120_2, ..., 120_N. Here, interference may occur between wireless communications inside the battery pack.

For example, the first wireless communication may include wireless communication 130_1 between the battery management system 110 and the first battery management module 120_1, wireless communication 130_2 between the battery management system 110 and the second battery management module 120_2, and/or wireless communication 130_N between the battery management system 110 and the N-th battery management module 120_N.

In addition, the second wireless communication may include wireless communication 132_12 between the first battery management module 120_1 and the second battery management module 120_2, wireless communication 132_1N between the first battery management module 120_1 and the N-th battery management module 120_N, wireless communication 132_2N between the second battery management module 120_2 and the N-th battery management module 120_N, and the like.

In one embodiment, when performing wireless communication between the battery management system 110 and the battery management module, an RF (Radio Frequency) circuit may be utilized. To this end, the battery management system and the plurality of battery management modules may each include an RF circuit. Here, the RF circuit may include electronic components necessary for generating, transmitting, receiving, and processing wireless signals.

In one embodiment, the RF circuit may include an oscillator that generates a wireless signal, a power amplifier that amplifies and/or reduces the output of the wireless signal generated by the oscillator to increase or decrease the power of the wireless signal, a filter that passes or blocks only signals of a specific frequency band among wireless signals, a mixer that mixes two or more wireless signals, an antenna that transmits and receives electromagnetic waves including wireless signals, a modulator that transmits digital data onto a wireless signal, a demodulator that extracts data from a wireless signal, a synchronization circuit that synchronizes transmitter and receiver signals of the wireless signal, a noise suppressor that removes unintended signals or noise included in the wireless signal, and the like.

For example, an oscillator of a transmitting RF circuit generates a wireless signal, data is transmitted onto a wireless signal through a modulator, a power amplifier amplifies the output of the generated wireless signal, and an antenna transmits the amplified wireless signal. An antenna of a receiving RF circuit receives the transmitted wireless signal, and a filter extracts a signal of a required frequency band. The demodulator may convert the wireless signal into data. Through a series of wireless communications, the BMS and/or BMM may process the data. Here, the RF circuit may be designed according to the requirements of the transmission/reception output power, frequency band, and SNR (Signal-to-Noise Ratio) of the wireless signal.

In one embodiment, the wireless communication between the battery management system and the plurality of battery management modules, which each comprise the RF circuit, may be performed by a channel of a frequency band allocated using a frequency hopping method. Here, the frequency hopping method may comprise Fixed Frequency Hopping or Adaptive Frequency Hopping (AFH).

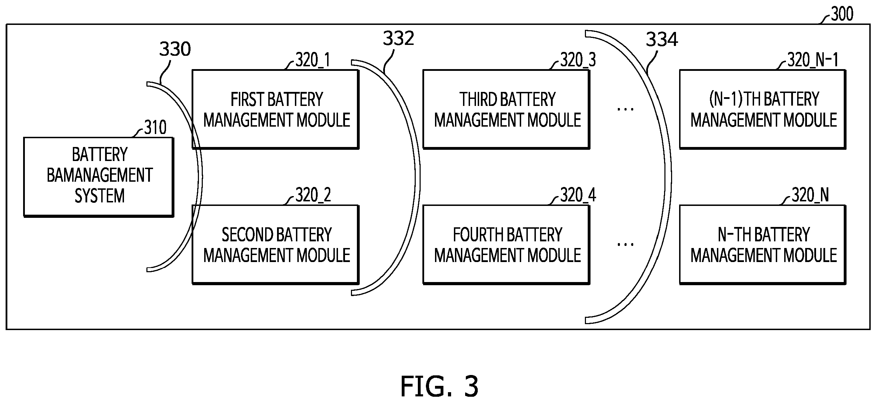

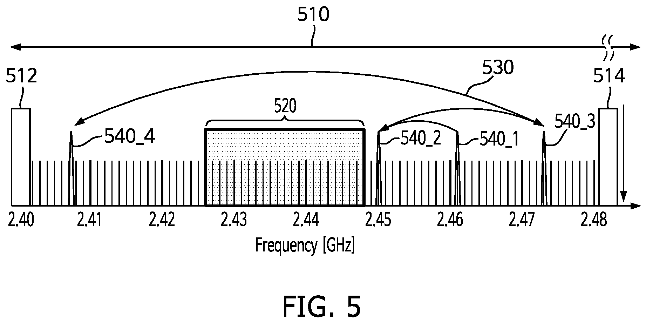

In one embodiment, the wireless communication channel between the battery management system and each of the battery management modules may be allocated according to the battery pack radio environment through frequency hopping. Here, even if the RF circuit design of the battery management system or battery management module is optimized, it may not be easy to predict the radio environment inside the battery pack due to the internal structure of the battery pack and interference with other radio waves such as noise that may occur during the use of an electronic device (for example, an electric vehicle) in which the battery is placed. A description of frequency hopping and the radio environment is provided herein, for example, with reference to FIG. 3 and the like. In one embodiment, the battery management system 110 may record hopping history data allocated to each of a plurality of channels through frequency hopping in connection with wireless communication between the battery management system and each of the plurality of battery management modules. Here, the hopping history data may include information about which channel is allocated through frequency hopping in wireless communication between the battery management system and each of the plurality of battery management modules. In one embodiment, the battery management system may generate a probability distribution model associated with each of the plurality of battery management modules based on the recorded hopping history data. Here, the probability distribution model may be associated with the usage frequency of each of the plurality of channels according to frequency hopping in wireless communication between a specific battery management module and the battery management system 110. For example, in the case of the plurality of channels included in the frequency band used for wireless communication between the battery management system 110 and each of the plurality of battery management modules, the usage frequency of each channel may indicate the ratio at which each of the plurality of channels was used during a predetermined time. A description of the hopping history data and probability distribution model is provided herein, for example, with reference to FIG. 5 and the like.

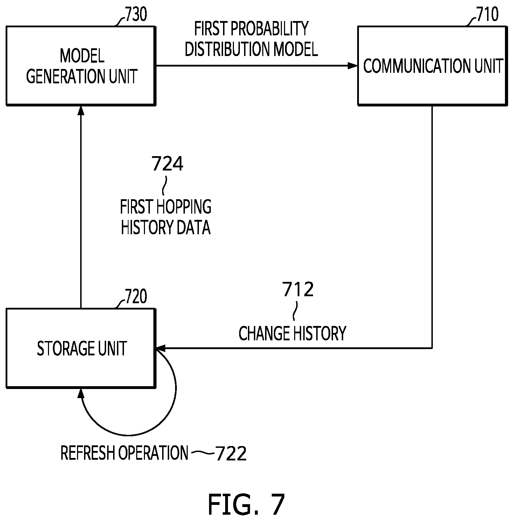

In one embodiment, the battery management system 110 may perform wireless communication with any one of the plurality of battery management modules (for example, the first battery management module, the second battery management module, or the like) by allocating any one of the plurality of channels (for example, the first channel, the second channel, or the like) based on the frequency hopping and probability distribution model and setting the communication properties associated with the corresponding channel. Description of the allocation of one of the channels and the setting of the communication properties for the corresponding channel based on the frequency hopping and probability distribution model is described herein, for example, in FIG. 7 and below.

With such a configuration, frequency hopping history data that sets the channel used for wireless communication between the battery management system and each of the plurality of battery management modules may be recorded by considering the radio environment of the battery pack. In addition, a probability distribution model including the usage frequency information of each channel may be generated by utilizing the recorded frequency hopping history data.

With such a configuration, the radio environment for each battery management module and each channel may be estimated based on the probability distribution model or the usage frequency of each channel. In addition, an active battery management system capable of adaptively setting or controlling communication properties of wireless communication based on the estimated radio environment may be provided.

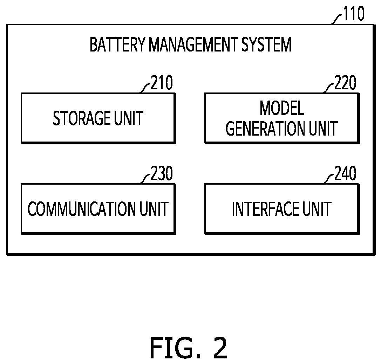

FIG. 2 is a block diagram of a battery management system according to some embodiments of the present disclosure. Referring to FIG. 2, the battery management system 110 may be configured to perform wireless communication with the battery management module through frequency hopping to transmit and receive battery cell state information and the like. Here, the battery management system 110 may perform wireless communication with the battery management module through frequency hopping while considering the radio environment inside and outside the battery pack. For example, the battery management system 110 may include a storage unit 210, a model generation unit 220, a communication unit 230, and an interface unit 240.

In one embodiment, the storage unit 210 may store hopping history data for a plurality of channels associated with any one of the plurality of battery management modules. For example, wireless communication between the battery management system 110 and each of the plurality of battery management modules may be performed in a specific frequency band, and the frequency band may be subdivided into a plurality of channels. A specific channel may be allocated and used for wireless communication between the battery management system 110 and any of the battery management modules. Here, the specific channel may be allocated through frequency hopping in consideration of the radio environment associated with the corresponding battery management module. The storage unit 210 may continuously monitor each of the plurality of channels included in the frequency band used for wireless communication. In addition, when a specific channel is used for wireless communication with the corresponding battery management module, the usage record of the specific channel may be stored as hopping history data associated with the corresponding battery management module.

In one embodiment, frequency hopping may occur in wireless communication between the battery management system 110 and a specific battery management module. Here, frequency hopping of wireless communication may be performed by the communication unit 230, but is not limited thereto. The storage unit 210 may store allocation history information of frequency channels used in each frequency hopping step as hopping history data associated with a specific battery management module. Here, the hopping history data associated with a specific battery management module may include information on how the frequency used during wireless communication between the battery management system and the specific battery management module changes over time. For example, this information may include the time at which each of the plurality of channels was used during wireless communication with the specific battery management module and the duration of use.

In one embodiment, the storage unit 210 may store frequency hopping history data of wireless communication between the battery management system 110 and each of the plurality of battery management modules. Referring to FIG. 1, wireless communication 130_1 between the battery management system 110 and the first battery management module 120_1, and wireless communication 130_2 between the battery management system 110 and the second battery management module 120_2 may affect each other, but each communication may be performed individually. Accordingly, the storage unit 210 may store hopping history data of wireless communications 130_1 to 130_N associated with each battery management module, respectively.

In one embodiment, the storage unit 210 may store frequency hopping history data of wireless communication between a plurality of battery management modules, respectively. For example, referring to FIG. 1, hopping history data associated with wireless communication 132_12 between the first battery management module 120_1 and the second battery management module 120_2 may be stored. The hopping history data associated with wireless communication between the plurality of battery management modules may be utilized for analysis of wireless communication between the battery management system and each of the plurality of battery management modules.

In one embodiment, the model generation unit 220 may generate a probability distribution model associated with each battery management module based on the hopping history data stored in the storage unit. For example, the model generation unit 220 may generate a probability distribution model for the first battery management module, a probability distribution model for the second battery management module, and a probability distribution model for the N-th battery management module. To this end, the model generation unit 220 may receive hopping history data associated with each battery management module stored in the storage unit. Here, the hopping history data may include information including the number of allocations/uses of each channel used in wireless communication with a specific battery management module, the duration of use, the communication success rate, and/or the interference frequency.

In one embodiment, the model generation unit 220 may identify the frequency of use and performance of a frequency channel in wireless communication with a specific battery management module based on the hopping history data. For example, among a plurality of channels included in a frequency band used for wireless communication, it is possible to extract usage pattern information such as how frequently a specific channel was used during a predetermined entire time period, whether a specific channel was used frequently but had a lot of interference, and whether a specific channel operates more stably during a specific time period.

In one embodiment, the model generation unit 220 may generate a probability distribution model associated with the usage frequency of each frequency channel by utilizing the usage frequency information of the identified specific channel. With this probability distribution model, channel selection and/or communication properties associated with the selected channel may be optimized in communication with a specific battery management module.

In one embodiment, the probability distribution model generated by the model generation unit 220 may be updated according to a certain procedure, as described herein, for example with respect to FIG. 7.

In one embodiment, the communication unit 230 may allocate any one of the plurality of channels to the corresponding battery management module using a frequency hopping method. For example, the communication unit 230 may continuously monitor a plurality of channels included in a frequency band used for wireless communication through frequency hopping. In addition, the communication unit 230 may monitor a radio environment associated with wireless communication with a specific battery management module. Based on this, the communication unit 230 may adaptively or dynamically allocate a channel with less interference and superior signal quality to the wireless communication of a specific battery management module.

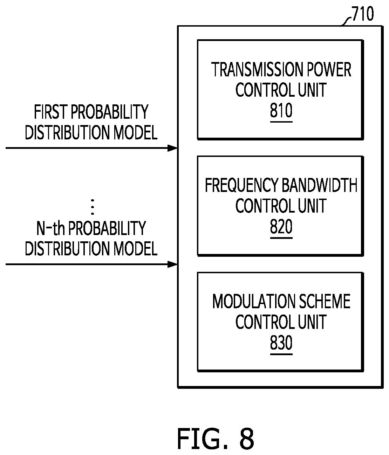

In one embodiment, the communication unit 230 may set communication properties associated with the corresponding channel based on the generated probability distribution model. Here, the communication unit 230 may set or control communication properties associated with a specific channel allocated to a specific battery management module by referring to the probability distribution model associated with a specific battery management module generated by the model generation unit. For example, the communication properties associated with a specific channel may include at least one of a power level, a bandwidth, a modulation scheme, an error correction scheme, and a data rate of the specific channel. A description of the communication properties is provided herein, for example, with respect to FIG. 8.

In one embodiment, the communication unit 230 may perform wireless communication with the battery management module through the channel using the allocated specific channel and the set communication properties. The communication unit 230 may transmit and receive data with the specific battery management module according to the set communication properties. In addition, the communication unit 230 may adjust the communication properties during frequency hopping based on the probability distribution model generated by the model generation unit 220 or the probability distribution model updated in real-time, if necessary, to maintain the quality of communication with the specific battery management module.

In one embodiment, the interface unit 240 may be used for the battery management system 110 to interact with an external system and exchange data. Here, the external system may include a vehicle control system, a charger, a central monitoring system, and the like. For example, the interface unit 240 may transmit data (for example, battery state information, error warning, charging state, temperature, and the like) received from the battery management module by the communication unit 230 to the external system, and may receive a signal for supplying power or cutting off power supply from the external system.

In addition, the external system may include a vehicle other than the vehicle equipped with the battery management system 110. The interface unit 240 may perform V2V (Vehicle-to-Vehicle) communication with other vehicles. Through this, data such as road conditions, collision avoidance, and/or energy sharing may be exchanged. For example, coordinated driving may be performed or collision risk may be avoided through V2V communication between autonomous vehicles by the interface unit 240.

In addition, the external system may include a smartphone and a mobile app. The driver may remotely monitor or control the vehicle state through the smartphone, mobile app, and communication with the interface unit 240.

In one embodiment, communication between the battery management system and the battery management module through the communication unit 230, and communication between the battery management system and the external system through the interface unit 240 may affect each other. For example, if the frequency bands of each wireless communication overlap or are physically close together, interference may occur between each communication. To reduce such interference, methods such as dividing the frequencies used by each of the internal communication and the external communication, or optimizing the antenna design of the RF circuit may be used. Accordingly, when allocating a channel used for communication between the battery management system and the battery management module through the communication unit 230 and/or setting its communication properties, the radio environment of the battery pack according to communication with the external system through the interface unit 240 may also be considered.

FIG. 3 is a diagram showing the internal structure and radio environment of a battery pack according to some embodiments of the present disclosure. FIG. 3 illustrates that a plurality of battery management modules are arranged at regular intervals to the right of a battery management system 310 inside a battery pack 300, but is not limited thereto. For example, the plurality of battery management modules may be arranged radially around the battery management system.

In one embodiment, the output of a wireless communication signal transmitted by the battery management system to the plurality of battery management modules may correspond to at least one of 8 dBm, 10 dBm, and 12 dBm. The power of the transmission signal output from the battery management system may be partially lost depending on the battery pack design structure and may reach each battery management module. Each battery management module may receive a wireless communication signal through an antenna and convert the received wireless communication signal into an RSSI (Received Signal Strength Indication). The converted RSSI may include information on the strength of the received wireless communication signal. Here, the RSSI of each battery management module may vary depending on the location where each battery management module is placed inside the battery pack. For example, the RSSI of a battery management module located close to the battery management system may be measured as high, and the RSSI of a battery management module located far away may be measured as low. This is because spatial power loss may occur at the distance at which a wireless communication signal transmitted from the battery management system is transmitted to the battery management module. Referring to FIG. 3, the battery pack 300 is designed with a battery management system 310 and a plurality of battery management modules 320_1 to 320_N arranged in a fixed structure. In addition, wireless communication signals 330, 332, and 333 transmitted from the battery management system 310 may be transmitted to the plurality of battery management modules. Here, the wireless communication signals 330, 332, and 333 may be transmitted in the form of electromagnetic waves. The first battery management module 320_1 or the second battery management module 320_2 located at a close distance from the battery management system 310 may be expected to have relatively good wireless signal strength. On the other hand, the N-1 battery management module 320_N-1 or the N-th battery management module 320_N located at a far distance from the battery management system 310 may be expected to have relatively weak wireless signal strength due to relatively large spatial power loss.

With such a configuration, the battery management system 310 may allocate channels to be used for wireless communication with each battery management module through frequency hopping, considering the design structure in which a plurality of battery management modules are arranged inside the battery pack 300.

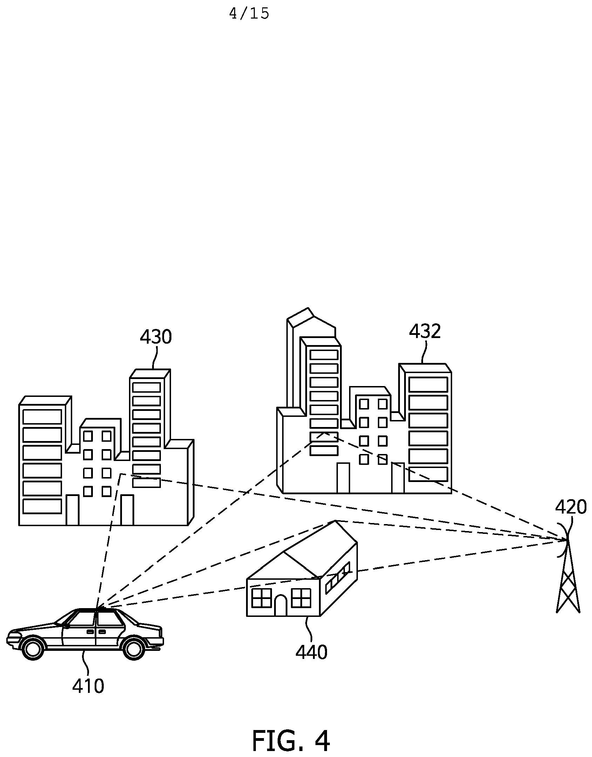

In addition, the hopping history data for a plurality of channels associated with the channels allocated to each battery management module may vary depending on the spatial location in which each battery management module is arranged in the battery pack 300. Accordingly, the probability distribution model associated with each battery management module may also be generated differently depending on the internal design structure and usage environment of the battery pack. FIG. 4 is a diagram showing the external environment and radio environment of the battery pack according to some embodiments of the present disclosure. FIG. 4 illustrates a vehicle 410 including a battery management system according to one embodiment of the present disclosure and various external systems that may affect the radio environment of the battery pack of the vehicle 410. Referring to FIG. 1, the vehicle 410 may exchange data or communicate with an external system through an interface unit included in the battery management system. Referring to FIG. 4, the external system may include a base station 420 that wirelessly communicates with the vehicle 410. Here, interference may occur between a wireless signal emitted from the base station 420 and directly transmitted to the vehicle 410 and a channel used for wireless communication within the battery pack in the vehicle 410. In addition, the wireless signal reflected by buildings 430 and 432 located outside the vehicle 410 or scattered by an external building 440 may also affect the wireless communication within the battery pack.

An external system that may affect the wireless communication within the battery pack inside the vehicle 410 is not limited to the wireless communication base station 420 operating near the vehicle 410. For example, the external system may include another vehicle operating near the vehicle 410 that emits electromagnetic waves or wireless communication signals, a traffic management system connected to the road on which the vehicle 410 is driving, or a wireless charger near the vehicle 410.

In addition, the driving habits of a driver operating the vehicle 410 including a battery management system according to one embodiment of the present disclosure may also affect the wireless communication within the battery pack of the vehicle 410. In addition, the vibration of the vehicle 410 itself and its frequency, which may occur depending on the driver's driving style, may affect the wireless communication channel inside the battery pack in the short term or long term. With this configuration, the battery management system may perform frequency hopping based on the internal radio environment of the battery pack, which considers not only the internal structure of the battery pack but also the interference effect caused by the external environment of the battery pack.

FIG. 5 shows an example in which a wireless communication channel is established by a radio environment and frequency hopping according to some embodiments of the present disclosure. Referring to FIG. 5, a frequency band 510 used for wireless communication between a battery management system and a plurality of battery management modules may include an ISM (Industrial, Scientific, and Medical Band). For example, a frequency band of 2.4 GHz or 2.40 to 2.48 GHz may be included. However, the present disclosure is not limited thereto. The frequency band 510 used for wireless communication may include a 900 MHz or 5.8 GHz band, in some embodiments.

In one embodiment, the frequency band 510 used for wireless communication within a specific battery pack may be divided into a first guard band that sets a lower limit and a second guard band that sets an upper limit. By this division, interference with wireless communication within the battery pack and other radio waves may be minimized, and a communication quality above a certain level may be managed. Referring to FIG. 5, in one embodiment, the first guard band 512 may be set to 2.40 GHz, and the second guard band 514 may be set to 2.48 GHz. In one embodiment, referring to FIGS. 3 and 4, wireless communication with a specific battery management module may be performed through frequency hopping. At this time, if the signal strength of a specific frequency band is estimated to be poor, the band may be avoided during frequency hopping and a band with relatively good signal strength may be allocated. Here, whether the signal strength of a specific frequency band is estimated to be poor may be determined using a signal-to-noise ratio (SNR), a received signal strength indicator (RSSI), a bit error rate (BER), and/or the like. For example, if the SNR of a wireless communication signal is higher than a threshold value, indicating severe interference, or if the error occurrence rate exceeds a threshold value, indicating severe errors, the signal strength may be estimated to be poor.

Referring to FIG. 5, in one embodiment, a certain frequency band among the frequency bands 510 used for wireless communication may be determined in real-time as a frequency band 520 estimated to have poor signal strength. Accordingly, the battery management system may allocate a frequency to a channel to be used for wireless communication with a specific battery management module through frequency hopping 530 while avoiding the corresponding band 520. For example, the battery management system may allocate a first frequency band (2.461 GHz) 540_1 to a channel to be used for wireless communication with a specific battery management module. Then, the battery management system may search in real-time for a frequency band estimated to have poor signal strength, exclude the corresponding frequency band, and allocate a second frequency band (2.450 GHz) 540_2 that has relatively less interference or a lower error rate to the specific battery management module among the remaining frequency bands. After that, the battery management system may sequentially allocate a third frequency band (2.473 GHz) 540_3 and a fourth frequency band (2.407 GHz) 540_4 to the specific battery management module.

With the above configuration, the battery management system may sequentially allocate and use a frequency band estimated to have good signal strength in real-time through frequency hopping in wireless communication with a specific battery management module.

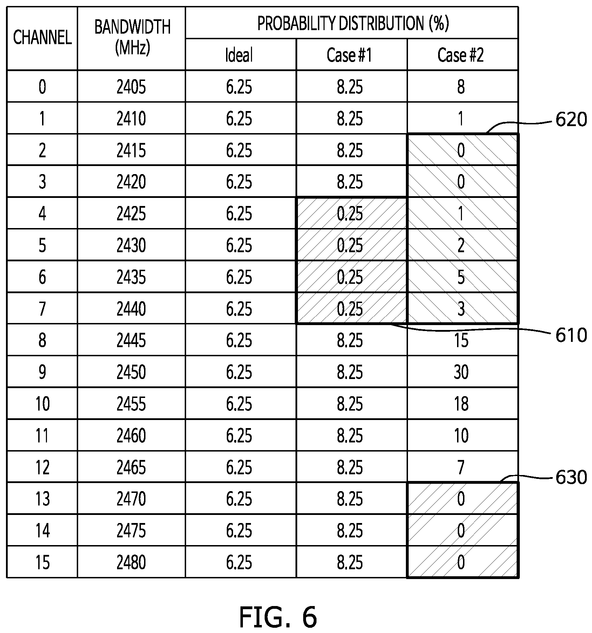

FIG. 6 is a diagram showing a probability distribution model according to some embodiments of the present disclosure. FIG. 6 is a diagram showing the usage frequency of each of a plurality of channels in communication between the battery management system and a specific battery management module according to the frequency hopping described above in FIG. 5. Here, the usage frequency of each channel by the communication unit of the battery management system may be recorded by the storage unit.

Referring to FIG. 6, in one embodiment, the frequency band used for wireless communication between the battery management system and each of the plurality of battery management modules may correspond to 2.405 to 2.480 GHz. Here, a total of sixteen frequency channels may be included in the corresponding frequency band. For example, as shown in FIG. 6, the frequency band used for wireless communication is divided into equal (for example, sixteen) intervals, and a plurality of channels may be designated according to the formula 2405+k*5(k=0, ..., 15) for the frequency band of the k-th channel. However, the present disclosure is not limited thereto, and a plurality of channels may be designated according to unequal intervals within the frequency band used for wireless communication.

In one embodiment, in an ideal case, the usage frequency of each channel among a plurality of channels may be recorded as the same during a predetermined time through frequency hopping. Referring to FIG. 6, it may be recorded that the usage frequency of sixteen channels is the same, and the probability that each channel is allocated and used for wireless communication is the same at 6.25%. Accordingly, each of the plurality of channels may be estimated to have equally good signal strength.

However, in actual wireless communication, the signal strength of a plurality of channels may not be the same due to interference, noise, and other factors. Accordingly, the usage frequencies of a plurality of channels in wireless communication during a predetermined time may differ from each other. Referring to FIG. 6, in the actual case 1, specific channels 610, among the plurality of channels, may be recorded with a lower usage frequency or a lower probability of being allocated in wireless communication than the remaining channels. For example, the usage probabilities of the fourth channel (2425 MHz) to the seventh channel (2440 MHz) may be recorded as 0.25%, and the usage probabilities of the remaining channels may be recorded as 8.25%. Accordingly, the fourth channel (2425 MHz) to the seventh channel (2440 MHz) may be estimated to have poor signal strength compared to the remaining channels. In addition, the electric field strength of the remaining channels may be uniformly good, and the electric field strength of the fourth channel (2425 MHz) to the seventh channel (2440 MHz) may be uniformly poor.

Here, whether the signal strength of a specific channel is good or poor may be estimated based on whether the usage probability of each channel recorded in each case is less than or greater than a predetermined threshold frequency. For example, the predetermined threshold frequency may be the usage probability of each channel in the ideal case. Referring to FIG. 6, the usage probability of the fourth channel (2425 MHz) to the seventh channel (2440 MHz) is 0.25% each, which is lower than the usage probability in the ideal case (6.25%), so the corresponding channel may be estimated to have poor signal strength. On the other hand, the usage probability of the remaining channels is recorded as 8.25% each, which is higher than the usage probability in the ideal case (6.25%), so the remaining channels may be estimated to have good signal strength.

Referring to FIG. 6, in the actual case 2, certain channels 620 and 630, among the plurality of channels, may be recorded to have lower usage probabilities than the remaining channels. By comparing the usage probabilities recorded in the actual case 2 with the ideal usage probability of each channel, it is possible to estimate whether the signal strength of each channel is good or poor. For example, the usage probability of the 0th channel is recorded as 8% in the actual case 2, which is higher than the usage probability in the ideal case (6.25%), so the signal strength of the 0th channel may be estimated to be good. In contrast, the usage probability of the first channel may be recorded as 1% in the actual case 2. This is lower than the usage probability in the ideal case (6.25%), so the signal strength of the first channel may be estimated to be poor. In particular, the channels (the second channel, the third channel, and the 13th to 15th channels) whose usage probability is recorded as 0% may be estimated to have relatively significantly poor signal strength.

With the above configuration, the usage frequency history of each channel, that is, the hopping history data, in the wireless communication with a specific battery management module for a predetermined time through frequency hopping may be recorded, and the probability of the usage of each channel and the probability distribution model of the usage of each channel may be generated based on the hopping history data. The communication properties of the channels used for wireless communication may be adaptively set by the generated probability distribution model.

FIG. 7 is a diagram showing a battery management system generating a probability distribution model associated with a battery management module according to some embodiments of the present disclosure. Referring to FIG. 7, a battery management system according to one embodiment of the present disclosure may include a communication unit 710, a storage unit 720, and a model generation unit 730. Here, FIG. 7 illustrates wireless communication between the battery management system and a first battery management module among a plurality of battery management modules.

In one embodiment, the communication unit 710 may perform wireless communication by allocating a first channel among a plurality of channels in wireless communication with the first battery management module through frequency hopping. In addition, the storage unit 720 may receive and store hopping history data of each channel including history information on the first channel being allocated and used in wireless communication with the first battery management module from the communication unit 710. In addition, the storage unit 720 may transmit the stored hopping history data of each channel to the model generation unit 730. In addition, the model generation unit 730 may calculate the usage frequency of each channel based on the hopping history data of each received channel and generate a first probability distribution model. Here, when the model generation unit 730 receives the hopping history data and generates the first probability distribution model, the storage unit 720 may delete the hopping history data stored in the storage unit 720 by performing a refresh operation 722.

In one embodiment, the communication unit 710 may change the first channel allocated to the wireless communication with the first battery management module to the second channel through frequency hopping and perform wireless communication. Accordingly, the communication unit 710 may transmit the change history 712 from the first channel to the second channel associated with the first battery management module, including the history information that the second channel is allocated instead of the first channel in the wireless communication with the first battery management module, to the storage unit 720. In addition, the storage unit 720 may transmit the change history 712 to the model generation unit 730. The model generation unit 730 may update the first probability distribution model associated with the first battery management module, which was previously generated, based on the received change history 712. After the first probability distribution model is updated, the storage unit 720 performs a refresh operation 722, so that the change history 712 from the first channel to the second channel associated with the first battery management module stored in the storage unit 720 may be erased.

Although FIG. 7 illustrates wireless communication with the first battery management module among the plurality of battery management modules, the present disclosure is not limited thereto.

For example, the storage unit 720 may further store second hopping history data for the plurality of channels associated with the second battery management module among the plurality of battery management modules. In addition, the model generation unit 730 may further generate a second probability distribution model associated with the second battery management module based on the second hopping history data. The communication unit 710 may allocate a second channel among a plurality of wireless channels to the second battery management module through frequency hopping. In addition, the communication unit 710 may set second communication properties associated with the second channel based on the second probability distribution model. In addition, the communication unit 710 may perform wireless communication with the second battery management module through the second channel using the second communication properties. Furthermore, the communication unit 710 may perform wireless communication with the second battery management module based on the second probability distribution model updated through frequency hopping and a series of update processes.

With the above configuration, the battery management system may use the memory space secured through the refresh operation to store new channel hopping history data, thereby advantageously and efficiently utilizing the memory space.

FIG. 8 is a diagram showing a battery management system according to one embodiment of the present disclosure setting communication properties associated with a plurality of channels. Referring to FIG. 8, the communication unit 710 may include a transmission power control unit 810, a frequency bandwidth control unit 820, and a modulation scheme control unit 830.

Referring to FIG. 7, the communication unit 710 may allocate a specific channel among a plurality of channels to a first battery management module through frequency hopping. In addition, the communication unit 710 may set communication properties associated with a specific channel based on a first probability distribution model generated in association with the first battery management module, and may perform wireless communication with the first battery management module through the specific channel using the set communication properties. Here, the communication properties associated with a specific channel in wireless communication with a specific battery management module may include transmission power, bandwidth, and modulation scheme.

In one embodiment, the communication unit 710 may control the transmission power associated with the first channel allocated to the first battery management module based on the first probability distribution model. For example, the communication unit 710 may lower the transmission power associated with the first channel if the usage frequency of the first channel is greater than a predetermined threshold frequency based on the first probability distribution model. In addition, the communication unit 710 may increase the transmission power associated with the first channel if the usage frequency of the first channel is less than a predetermined threshold frequency based on the first probability distribution model. Here, the control of the transmission power associated with the first channel may be performed by the transmission power control unit 810 included in the communication unit 710.

With the above configuration, when the communication unit performs wireless communication with a specific battery management module using a channel estimated to have poor signal strength through frequency hopping, the transmission power of the corresponding channel signal may be increased in advance, thereby maintaining or further improving the wireless communication performance associated with the corresponding channel at a certain level. In addition, with the above configuration, when the communication unit performs wireless communication with a specific battery management module using a channel estimated to have good signal strength through frequency hopping, the transmission power of the corresponding channel signal may be reduced in advance, thereby reducing power consumption of the wireless communication associated with the corresponding channel.

In one embodiment, the communication unit 710 may control the frequency bandwidth associated with the first channel allocated to the first battery management module based on the first probability distribution model. For example, the communication unit 710 may lower the bandwidth associated with the first channel when the usage frequency of the first channel is greater than a predetermined threshold frequency based on the first probability distribution model. In addition, the communication unit 710 may increase the bandwidth associated with the first channel based on the first probability distribution model if the usage frequency of the first channel is less than a predetermined threshold frequency. Here, the control of the bandwidth associated with the first channel may be performed by the frequency bandwidth control unit 820 included in the communication unit 710.

With the above configuration, since more signal processing or error correction may be possible through a wide bandwidth, if the frequency bandwidth of a channel estimated to have poor signal strength is increased, the possibility of maintaining a certain level or higher of wireless communication may be increased. In one embodiment, the communication unit 710 may control the modulation scheme associated with the first channel allocated to the first battery management module based on the first probability distribution model. For example, the communication unit 710 may control or determine the modulation scheme associated with the first channel as a modulation scheme having lower error correction capability than a reference modulation scheme if the usage frequency of the first channel is greater than a predetermined threshold frequency based on the first probability distribution model. In addition, the communication unit 710 may control or determine the modulation scheme associated with the first channel as a modulation scheme having higher error correction capability than a reference modulation scheme, based on the first probability distribution model, if the usage frequency of the first channel is lower than a predetermined threshold frequency. Here, the control of the modulation scheme associated with the first channel may be performed by the modulation scheme control unit 830 included in the communication unit 710. Here, the modulation scheme may refer to a method of changing the characteristics (for example, amplitude, frequency, phase, and the like) of a signal so that a digital or analog signal can be transmitted through a wireless communication channel.

For example, the modulation scheme may include amplitude modulation (AM), frequency modulation (FM), phase modulation (PM), quadrature amplitude modulation (QAM), frequency shift keying (FSK), phase shift keying (PSK), and/or OFDMA (Orthogonal Frequency Division a plurality of Access). Here, each modulation scheme may be selected according to a specific wireless communication environment and requirements, and at this time, data transmission speed, frequency efficiency, and/or error correction capability, and the like may be considered.

In one embodiment, each modulation scheme may have different error correction capabilities. Here, the error correction capability may be an indicator of how robust the modulated signal is against errors or interference that may occur during wireless communication transmission. In one example, the modulation scheme may be determined by considering various characteristics such as error correction capability as well as SNR requirement level, bit error rate, modulation scheme complexity, and data transmission speed according to the radio environment or requirements of the wireless communication.

With the above configuration, a stable and error-resistant modulation scheme suitable for the communication system requirements may be selected while considering the radio environment in wireless communication with a specific battery management module. Accordingly, the stability of wireless communication within the battery pack may be secured or improved to a certain level overall. The above description is based on wireless communication with the first battery management module, in which the communication unit 710 sets or controls the communication properties. However, referring to FIG. 8, the communication unit 710 may allocate channels through frequency hopping in wireless communication with each battery management module based on probability distribution models (the first probability distribution model to the n-th probability distribution model) associated with each of the plurality of battery management modules, and may set communication properties associated with each channel to perform wireless communication with each battery management module. In addition, referring to FIGS. 3 to 5, the radio environment of each battery management module may vary in wireless communication with each battery management module. Accordingly, the probability distribution models associated with each battery management module generated by the model generation unit may differ from each other. In addition, the channels allocated through frequency hopping by the communication unit in wireless communication with each battery management module and the communication properties of each channel may be the same or different from each other.

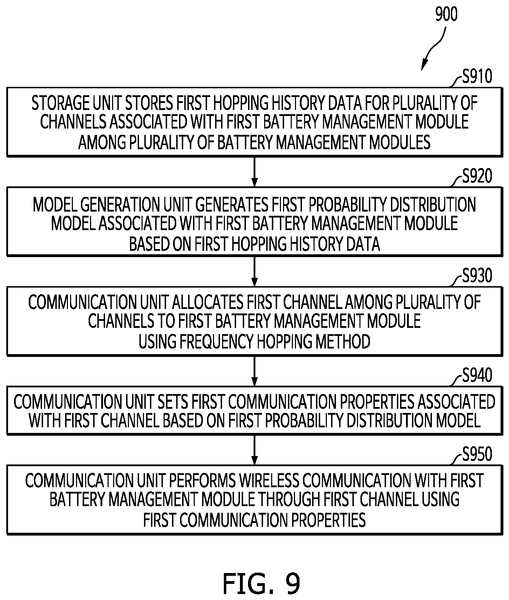

FIG. 9 is a flowchart showing a communication method 900 of a battery management system according to some embodiments of the present disclosure. The method may be performed by at least one processor (for example, a microcontroller unit or the like) of the battery management system or an information processing system outside the vehicle.

The method 900 may be initiated by a storage unit storing (S910) first hopping history data for a plurality of channels associated with a first battery management module among a plurality of battery management modules. Additionally or alternatively, the storage unit may store second hopping history data for a plurality of channels associated with a second battery management module among a plurality of battery management modules.

Thereafter, in one embodiment, the model generation unit may generate (S920) a first probability distribution model associated with the first battery management module based on the first hopping history data. Additionally or alternatively, the model generation unit may generate a second probability distribution model associated with the second battery management module based on the second hopping history data.

After this, in one embodiment, the communication unit may allocate a first channel among the plurality of channels to the first battery management module using a frequency hopping method (S930). Additionally or alternatively, the communication unit may allocate a second channel among the plurality of wireless channels to the second battery management module using a frequency hopping method. Here, the frequency hopping method may include an adaptive frequency hopping method.

After this, in one embodiment, the communication unit may set first communication properties associated with the first channel based on a first probability distribution model (S940). Additionally or alternatively, the communication unit may set second communication properties associated with the second channel based on a second probability distribution model.

For example, the communication unit may control a transmission power associated with the first channel based on the first probability distribution model. Additionally or alternatively, the communication unit may control a bandwidth associated with the first channel based on the first probability distribution model. Additionally or alternatively, the communication unit may control the modulation scheme associated with the first channel based on the first probability distribution model.

Thereafter, in one embodiment, the communication unit may perform wireless communication with the first battery management module through the first channel using the first communication properties (S950). Additionally or alternatively, the communication unit may perform wireless communication with the second battery management module through the second channel using the second communication properties.

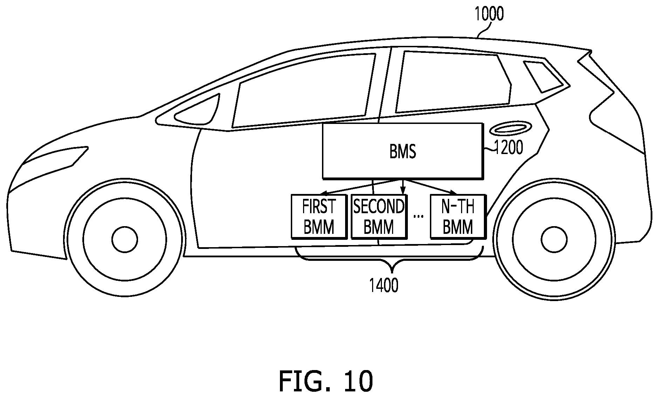

FIG. 10 is a diagram illustrating an example of a battery management system included in a vehicle 1000 according to some embodiments of the present disclosure. As illustrated, the vehicle 1000 may include a battery management system 1200 and a plurality of battery management modules 1400. The battery management system 1200 may include a storage unit, a model generation unit, and a communication unit.

Here, the storage unit may store hopping history data for a plurality of channels associated with any one of the plurality of battery management modules 1400. In addition, the model generation unit may generate a probability distribution model associated with the corresponding module based on the hopping history data. In addition, the communication unit may allocate any one of the plurality of channels to the corresponding model through frequency hopping, set communication properties associated with the corresponding channel based on the probability distribution model, and perform wireless communication with the corresponding battery management module through the corresponding channel using the communication properties.

In one embodiment, the battery management system 1200 may request state information of battery cells associated with each module to the plurality of battery management modules 1400 through such wireless communication. Each of the battery management modules 1400 may monitor and manage state information (for example, voltage, current, temperature, and the like) of a plurality of battery cells associated with the battery module including each module according to the request of the battery management system 1200. In addition, each of the battery management modules 1400 may transmit the state information collected through wireless communication to the battery management system 1200. In addition, the battery management system 1200 may control the state of the battery cell included in the battery pack based on the received state information.

In one embodiment, the battery management system 1200 may store history data (or "hopping history data associated with each battery management module or each channel") of the channel used for wireless communication with any one of the plurality of battery management modules 1400.

Additionally or alternatively, the battery management system 1200 may generate a probability distribution model associated with each channel based on the stored hopping history data.

Additionally or alternatively, the battery management system 1200 may set or control the communication properties of each channel through frequency hopping based on the generated probability distribution model associated with each channel. For example, the battery management system 1200 may set or control at least one of the transmission power, frequency band, and modulation scheme of the communication channel for wireless communication with the first battery management module.

In light of the above configuration, the battery management system may utilize the frequency hopping record data to generate a probability distribution model associated with each of the plurality of channels used for wireless communication, and use the same to set the communication properties of each channel to perform wireless communication, thereby improving the quality of wireless communication within the vehicle.

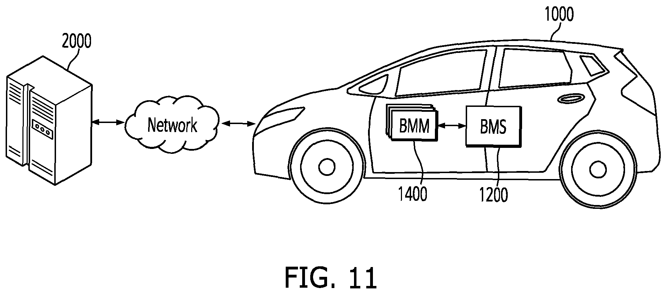

FIG. 11 is a diagram showing an example of a vehicle 1000 and an information processing system 2000 communicating according to some embodiments of the present disclosure. As illustrated, the vehicle 1000 may include a battery management system 1200, a plurality of battery management modules 1400, and a communication unit (not shown). The vehicle 1000 may transmit and receive data with the information processing system 2000 through a network using the communication unit. The information processing system 2000 and the battery management system 1200 may each include at least one processor. For example, the battery management system 1200 may include a central processing unit (CPU), a neural processing unit (NPU), and/or the like. The information processing system 2000 may be a server located outside the vehicle 1000.

The vehicle 1000 may transmit data associated with wireless communication between the battery pack, the battery management system 1200, and each of the plurality of battery management modules 1400 to the information processing system 200 via a network. In addition, the information processing system 2000 may include an operating system and at least one program code.

In one embodiment, the information processing system 2000 may perform some or all of the functions of the battery management system 1200 illustrated in FIG. 10. For example, the information processing system 2000 may receive and store the history data (or "hopping history data associated with each battery management module or each channel") used for wireless communication between any one of the plurality of battery management modules 1400 and the battery management system 1200 from the battery management system 1200 through the network.

Additionally or alternatively, the information processing system 2000 may generate a probability distribution model associated with each channel based on the hopping history data stored in the information processing system 2000. As another example, the information processing system 2000 may receive the hopping history data stored in the battery management system 1200 through the network and generate a probability distribution model associated with each channel based on the hopping history data.

Additionally or alternatively, the information processing system 2000 may set or control the communication properties of each channel through frequency hopping based on the generated probability distribution model associated with each channel. For example, the information processing system 2000 may set or control at least one of the transmission power, frequency band, and modulation scheme of the communication channel for wireless communication with the battery management system 1200 and the first battery management module. As another example, the information processing system 2000 may transmit the generated probability distribution model associated with each channel to the battery management system 1200 through a network, and the battery management system 1200 may set or control the communication properties associated with each channel based on the generated probability distribution model.

In addition, the information processing system 2000 may compare and analyze wireless communication information inside the vehicle 1000 and wireless communication information inside another vehicle (not shown) in real-time. Accordingly, by comprehensively utilizing wireless communication information inside not only the vehicle 1000 but also other vehicles located around the vehicle 1000, information on external factors affecting the radio environment of the battery internal communication of the vehicle 1000 may be comprehensively managed.

With this configuration, by utilizing the information processing system 2000 connected to the vehicle 1000 via a network, the battery management system 1200 may adaptively perform wireless communication with the battery management module and actively control the corresponding communication properties by overcoming the limitations of the performance of the internal modules of the vehicle 1000.

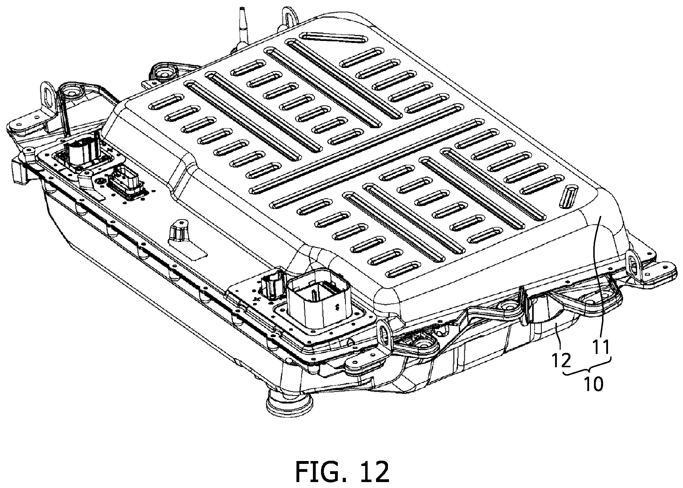

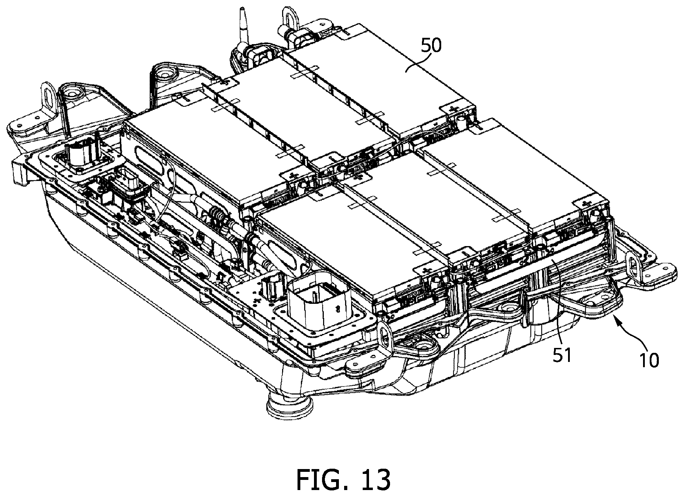

FIGS. 12 and 13 show a battery pack according to one or more embodiments of the present disclosure.

The battery pack may include a plurality of battery modules 50 and a housing 10 for accommodating the plurality of battery modules 50. For example, the housing 10 may include first and second housings 11 and 12 coupled in opposite directions through the plurality of battery modules 50. The plurality of battery modules 50 may be electrically connected to each other using a bus bar 51, and the plurality of battery modules 50 may be electrically connected to each other in a series/parallel or series-parallel mixed method, thereby obtaining desired (for example, required) electrical output.

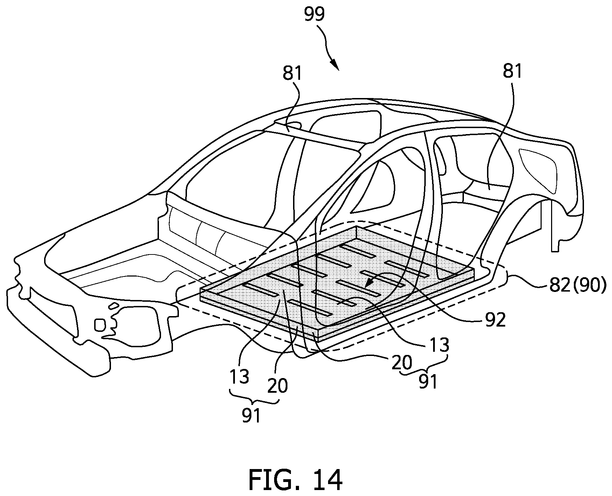

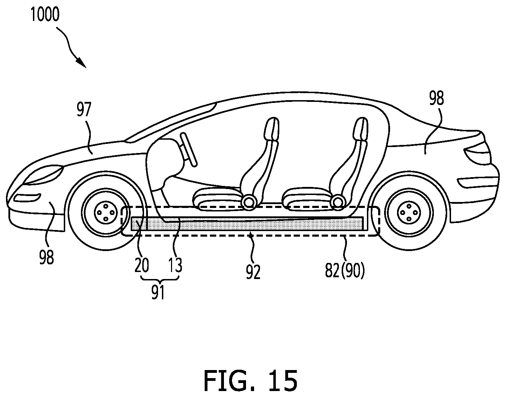

FIGS. 14 and 15 show a vehicle body and vehicle body parts having a battery pack according to one or more embodiments of the present disclosure.

In FIG. 14, a battery pack 91 may include a battery pack cover 13, which is a part of a vehicle underbody 92, and a pack frame 20 disposed under the vehicle underbody 92. The pack frame 20 and the battery pack cover 13 may be integrally formed with a vehicle floor 82.

The vehicle underbody 92 separates the inside and outside of a vehicle, and the pack frame 20 may be disposed outside the vehicle.

FIG. 15 is a schematic side view of a vehicle according to one or more embodiments of the present disclosure.

A vehicle 1000 may be formed by combining additional parts, such as a hood 97 in the front of the vehicle and fenders 98 respectively located in the front and rear of the vehicle to a vehicle body 99.

The vehicle 1000 may further include a vehicle floor 82, which is one of the vehicle body parts 90 including the battery pack 91 including the pack frame 20 and the battery pack cover 13.

The method described above may be provided as a computer program stored in at least one non-transitory computer-readable recording medium for execution on a computer. The medium may be a type of medium that continuously stores a program executable by a computer, or temporarily stores the program for execution or download. In addition, the medium may be a variety of writing means or storage means having a single piece of hardware or a combination of several pieces of hardware, and is not limited to a medium that is directly connected to any computer system, and accordingly, may be present on a network in a distributed manner. An example of the medium includes a medium configured to store program instructions, including a magnetic medium such as a hard disk, a floppy disk, and a magnetic tape, an optical medium such as a CD-ROM and a DVD, a magnetic-optical medium such as a floptical disk, and a ROM, a RAM, a flash memory, etc. In addition, other examples of the medium may include an app store that distributes applications, a site that supplies or distributes various software, and a recording medium or a storage medium managed by a server. The methods, operations, or techniques of the present disclosure may be implemented by various means. For example, these techniques may be implemented in hardware, firmware, software, or a combination thereof. Those skilled in the art will further appreciate that various illustrative logical blocks, modules, circuits, and algorithm steps described in connection with the disclosure herein may be implemented in electronic hardware, computer software, or combinations of both. To clearly illustrate this interchangeability of hardware and software, various illustrative components, blocks, modules, circuits, and steps have been described above generally in terms of their functionality. Whether such a function is implemented as hardware or software varies according to design requirements imposed on the particular application and the overall system. Those skilled in the art may implement the described functions in varying ways for each particular application, but such implementation should not be interpreted as causing a departure from the scope of the present disclosure.

In a hardware implementation, processing units used to perform the techniques may be implemented in one or more ASICs, DSPs, digital signal processing devices (DSPDs), programmable logic devices (PLDs), field programmable gate arrays (FPGAs), processors, controllers, microcontrollers, microprocessors, electronic devices, other electronic units designed to perform the functions described in the present disclosure, computer, or a combination thereof. Accordingly, various example logic blocks, modules, and circuits described in connection with the present disclosure may be implemented or performed with general purpose processors, DSPs, ASICs, FPGAs or other programmable logic devices, discrete gate or transistor logic, discrete hardware components, or any combination of those designed to perform the functions described herein. The general purpose processor may be a microprocessor, but in the alternative, the processor may be any related processor, controller, microcontroller, or state machine. The processor may also be implemented as a combination of computing devices, for example, a DSP and microprocessor, a plurality of microprocessors, one or more microprocessors associated with a DSP core, or any other combination of the configurations.

In the implementation using firmware and/or software, the techniques may be implemented with instructions stored on at least one non-transitory computer-readable medium, such as random access memory (RAM), read-only memory (ROM), non-volatile random access memory (NVRAM), programmable read-only memory (PROM), erasable programmable read-only memory (EPROM), electrically erasable PROM (EEPROM), flash memory, compact disc (CD), magnetic or optical data storage devices, etc. The instructions may be executable by one or more processors, and may cause the processor(s) to perform certain aspects of the functions described in the present disclosure.

If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that may be accessed by a general purpose or special purpose computer. By way of example, and not limitation, such computer-readable media may comprise RAM, ROM, EEPROM, CD-ROM or other optical disk storage, magnetic disk storage or other magnetic storage devices, or any other medium that may be used to carry or store desired program code means in the form of instructions or data structures and that may be accessed by a general-purpose or special-purpose computer, or a general-purpose or special-purpose processor. Also, any connection is properly termed a computer-readable medium.

For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor may read information from, and/or write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

Although the examples described above have been described as utilizing aspects of the currently disclosed subject matter in one or more standalone computer systems, aspects are not limited thereto, and may be implemented in conjunction with any computing environment, such as a network or distributed computing environment. Furthermore, the aspects of the subject matter in the present disclosure may be implemented in a plurality of processing chips or apparatus, and storage may be similarly influenced across a plurality of apparatus. Such apparatus may include PCs, network servers, and portable apparatus.

## Claims

1. A battery management system (110) comprising:
a storage unit (210) that stores first hopping history data for a plurality of channels associated with a first battery management module (120_1, 320_1) among a plurality of battery management modules (120_1 - 120_N; 320_1 - 320_N);
a model generation unit (220) that generates a first probability distribution model associated with the first battery management module (120_1, 320_1) based on the first hopping history data; and
a communication unit (230, 710) that allocates a first channel among the plurality of channels to the first battery management module (120_1, 320_1) using a frequency hopping method, sets first communication properties associated with the first channel based on the first probability distribution model, and performs wireless communication with the first battery management module (120_1, 320_1) through the first channel using the first communication properties.

2. The battery management system (110) as claimed in claim 1, wherein the first probability distribution model is associated with a usage frequency of each of the plurality of channels using the frequency hopping method in wireless communication between the first battery management module (120_1, 320_1) and the communication unit (230, 710).

3. The battery management system (110) as claimed in claim 1 or 2, wherein:
the first communication properties associated with the first channel comprise transmission power; and
the communication unit (230, 710) controls a transmission power associated with the first channel based on the first probability distribution model.

4. The battery management system (110) as claimed in claim 3, wherein the communication unit (230, 710) lowers the transmission power associated with the first channel based on the first probability distribution model when a usage frequency of the first channel is greater than a predetermined threshold frequency.

5. The battery management system (110) as claimed in claim 3, wherein the communication unit (230, 710) increases the transmission power associated with the first channel based on the first probability distribution model when a usage frequency of the first channel is less than a predetermined threshold frequency.

6. The battery management system (110) as claimed in claims 1 to 5, wherein:
the first communication properties associated with the first channel comprise a bandwidth; and
the communication unit (230, 710) controls a bandwidth associated with the first channel based on the first probability distribution model.

7. The battery management system (110) as claimed in claim 6, wherein the communication unit (230, 710) lowers the bandwidth of the first channel based on the first probability distribution model when a usage frequency of the first channel is higher than a predetermined threshold frequency.

8. The battery management system (110) as claimed in claim 6, wherein the communication unit (230, 710) increases the bandwidth of the first channel based on the first probability distribution model when a usage frequency of the first channel is lower than a predetermined threshold frequency.

9. The battery management system (110) as claimed in claims 1 to 8, wherein:
the first communication properties associated with the first channel comprise a modulation scheme; and
the communication unit (230, 710) controls a modulation scheme associated with the first channel based on the first probability distribution model.

10. The battery management system (110) as claimed in claim 9, wherein the communication unit (230, 710) determines a specific modulation scheme having a lower error correction capability than a reference modulation scheme as the modulation scheme associated with the first channel based on the first probability distribution model when a usage frequency of the first channel is higher than a predetermined threshold frequency.

11. The battery management system (110) as claimed in claim 9, wherein the communication unit (230, 710) determines a specific modulation scheme having a higher error correction capability than a reference modulation scheme as the modulation scheme associated with the first channel based on the first probability distribution model when a usage frequency of the first channel is lower than a predetermined threshold frequency.

12. The battery management system (110) as claimed in claims 1 to 11, wherein:
the communication unit (230, 710) performs wireless communication by changing the first channel allocated to the wireless communication with the first battery management module (120_1, 320_1) to a second channel using the frequency hopping method;
the storage unit (210) further stores a change history from the first channel to the second channel associated with the first battery management module; and
the model generation unit (220) updates the first probability distribution model associated with the first battery management module (120_1, 320_1) based on the change history from the first channel to the second channel associated with the first battery management module (120_1, 320_1).

13. The battery management system (110) as claimed in claim 12, wherein:
the change history from the first channel to the second channel associated with the first battery management module (120_1, 320_1) stored in the storage unit (210) is erased after the first probability distribution model is updated.

14. The battery management system (110) as claimed in claims 1 to 13, wherein:
the storage unit (210) further stores second hopping history data for the plurality of channels associated with a second battery management module (120_2, 320_2) among the plurality of battery management modules (120_1 - 120_N; 320_1 - 320_N);
the model generation unit (220) further generates a second probability distribution model associated with the second battery management module (120_2, 320_2) based on the second hopping history data; and
the communication unit (230, 710) further allocates a second channel among the plurality of channels to the second battery management module (120_2, 320_2) using the frequency hopping method, sets second communication properties associated with the second channel based on the second probability distribution model, and performs wireless communication with the second battery management module (120_2, 320_2) through the second channel using the second communication properties.

15. The battery management system (110) as claimed in claims 1 to 14, wherein the frequency hopping method is an adaptive frequency hopping (AFH) method.
